# EUROPEAN PATENT APPLICATION

(11) **EP 4 672 643 A1**
(43) Date of publication of application: **31.12.2025**
(21) Application number: 25182364.7
(22) Date of filing: 12.06.2025
(51) Int. Cl.: H04B 17/391, H04W 24/06

(54) **SYSTEM, METHOD, AND DEVICE FOR SIMULATING A BEAM SIGNAL**

(30) Priority: 24.06.2024 US 202463663552 P
(71) Applicant: MacDonald, Dettwiler and Associates Corporation, Ste-Anne-de-Bellevue, QC H9X 3R2 (CA)
(72) Inventor: Martel, Stéphane, Sainte-Anne-de-Bellevue, Quebec, H9X 3R2 (CA)
(74) Representative: Grünecker Patent- und Rechtsanwälte PartG mbB

(57) **Abstract**

Provided is a constellation and beam simulator for testing transmission and receiving systems using simulated beams. The simulators include a first node of the plurality of nodes. The first node includes a component simulator configured to simulate the components specific to the corresponding node, and a first modem simulator for communicatively connecting to a second modem simulator over a first simulated link via first beam real-time protocol (RTP) packets. The first modem simulator includes one or more of a first simulated beam generator and receiver. The first simulated beam generator includes a first beam packetization module configured to packetize a first beam frame into the first beam RTP packets each first beam RTP packet comprising an RTP header. The RTP header includes a timestamp representing a start time of a first beam timeframe and a marker indicating the index of the each first RTP packet in the first beam frame.

## Description

### Technical Field

The following relates generally to systems for simulating beam signals and more particularly to systems, methods, and devices for simulating beam signals for testing transmission and receiving systems and platforms.

### Introduction

Due to an increased interest in mega-constellations, and in particular mega-constellations including regenerative satellites, development of improvements to these technologies have increased significantly. Furthermore, the beam generation of these new systems has substantially increased; from tens of beams to hundreds. Unfortunately, the availability of hardware, support staff, and real-world environments to functionally validate operations while code being developed, train operators, and develop landing stations, terminals, network operating centers (NOCs) and site recovery managers (SRMs) is limited. The expensive to appropriately scale these capabilities, where possible, is substantial and often prohibitive.

Existing systems have been developed to simulate nodes of a network such as user terminals, landing stations, and digital payloads as well as the corresponding software. However, the existing simulated communication systems focus on testing the nodes and corresponding software is directed to these nodes specifically with little to no simulation of the interconnection between.

Testing the communications system as a whole includes testing, via real or simulated tests, the interconnections between nodes (i.e. the transmitting and receiving the radio frequency (RF) signal). Existing signal generators can generate test signals for testing purposes. However, these systems use specialized equipment to test with these test signals. For example, chambers specialized to the system may be created for use in existing systems. Accordingly, this testing can only occur once the hardware being tested exists preventing testing of the system or software during development of the yet to be known hardware. Furthermore, the reliance on hardware limits the number of beams that may be tested to the very limited capacity of the hardware and to basic signals rather than simulations of real-world signals. Accordingly, these existing systems do not account for environmental and deployment factors as well as variations over time that real world signals experience.

Accordingly, there is a need for an improved system, method, and device for simulating beam signals that overcomes at least some of the disadvantages of existing systems and methods.

### Summary

Provided is a constellation simulator for testing transmission and receiving systems and platforms using simulated beams. The constellation simulator includes a plurality of nodes. A first node of the plurality of nodes includes a component simulator configured to simulate the components specific to the corresponding node, and a first modem simulator for communicatively connecting to a second modem simulator over a first simulated link. The first modem simulator includes one or more of a first simulated beam generator and a first simulated beam receiver. The first simulated beam generator includes a first beam packetization module configured to packetize a first beam frame into first beam real-time protocol (RTP) packets each first beam RTP packet comprising an RTP header. The RTP header includes a timestamp representing a start time of a timeframe of the first beam frame and a marker indicating the index of the each first RTP packet in the first beam frame. The first beam packetization module is further configured provide the first RTP packets to the second modem simulator over the first simulated link. The first simulated beam receiver includes a packet assembling module configured to receive and assemble second RTP packets from the second modem simulator based on the a second RTP header to obtain a second assembled beam frame corresponding to a second beam frame.

The first simulated beam generator may further include a first beam header generating module configured to generate a first beam header comprising beam information. The first beam packetization module may further be configured to combine the first beam header and channel data to obtain the first beam frame.

The second simulated beam receiver may further include a reception determination module configured to determine based on beam information of the second beam frame if the second assembled beam frame is received.

The beam information may include one or more of an energy per symbol to noise density ration (Es/No), a latitude, longitude and altitude of the beam center, a beam radius, beam bandwidth, and custom beam shape and the determination of if the beam frame is received may be based on if the beam information the indicates that the beam is within the area range of the receive beam former.

The first simulated beam generator may further include a first channel packet generating module configured to obtain first beam channel packets from a multi-channel signal. The first beam packetization module may be further configured to combine the first beam channel packets to obtain the first beam frame.

The first simulated beam receiver may further include a received signal module configured to generate a received signal from the second assembled beam frame.

One or more of the first simulated beam generator and the first simulated beam receiver may be communicatively connected, respectively to a third simulated beam generator and receiver over a second simulated link.

The simulated link may be simulated via one or more of software or hard line.

The first simulated beam generator may be configured to generate a first beam stream comprising a plurality of beam frames over the first simulated link, the first beam frame being of the plurality of beam frames.

The first RTP packets may be transmitted in a burst or distributed across the timeframe of the beam frame.

The timeframe of the beam frame may be one or more of a dwell time, a burst time, a subframe and subframes.

The constellation simulator may further include a test agent configured to configure, inject errors and inspect components of the constellation simulator.

In another aspect, provided is a beam simulator for simulating beam signals for testing transmission and receiving systems and platforms. The beam simulator includes a first modem simulator communicatively connected to a second modem simulator over a first simulated link. The first modem simulator includes a first simulated beam generator including a first beam packetization module. The first beam packetization module is configured to packetize a first beam frame into first beam real-time protocol (RTP) packets each first beam RTP packet comprising an RTP header. The RTP header includes a timestamp representing a start time of a timeframe of the first beam frame and a marker indicating the index of the each first RTP packet in the first beam frame. The first beam packetization module is configured to provide the first RTP packets to the second modem simulator over the first simulated link. The beam simulator includes a second modem simulator including a second simulated beam receiver. The second simulated beam receiver includes a packet assembling module configured to receive and assemble the first RTP packets based on the RTP header to obtain a first assembled beam frame corresponding to the first beam frame.

The first simulated beam generator may further include a first beam header generating module configured to generate a first beam header comprising beam information. The first beam packetization module may be further configured to combine the beam header and channel data to obtain the first beam frame. The second simulated beam receiver may further include a reception determination module configured to determine based on the beam information if the beam frame is received.

The beam information may in include one or more of an energy per symbol to noise density ration (Es/No), a latitude, longitude and altitude of the beam center, a beam radius, beam bandwidth, and custom beam shape. The determination of if the beam frame is received, may be based on if the beam information the indicates that the beam is within the area range of the receive beam former.

The first simulated beam generator further may include a first channel packet generating module configured to obtain first beam channel packets from a multi-channel signal. The first beam packetization module may be further configured to combine the first beam channel packets to obtain the first assembled beam frame. The second simulated beam receiver further may include a received signal module configured to generate a received signal from the first assembled beam frame.

The first modem simulator may include a first simulated beam receiver communicatively connected to a second simulated beam generator of the second modem simulator.

One or more of the first simulated beam generator and the second simulated beam receiver may be communicatively connected, respectively, to a third simulated beam generator and receiver over a corresponding simulated link.

The simulated link may be simulated via one or more of software or hard line.

The first simulated beam generator may be configured to generate a first beam stream comprising a plurality of beam frames over the first simulated link, the first beam frame being of the plurality of beam frames.

The first RTP packets may be transmitted in a burst or distributed across the timeframe of the beam frame.

The timeframe of the beam frame may be one or more of a dwell time, a burst time, a subframe and subframes.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a is a block diagram of a constellation simulator, according to an embodiment;
Figure 2 is a block diagram, of the beam simulator of Figure 1 comprising two nodes, according to an embodiment;
Figure 3 is a block diagram of a simulated beam generator of Figure 2, according to an embodiment;
Figure 4 is a block diagram of a simulated beam receiver of Figure 2, according to an embodiment;
Figure 5 is a block diagram of a simulated beam stream of Figures 1 and 2, according to an embodiment;
Figures 6A and 6B are block diagrams of a beam header of Figure 5, according to an embodiment;
Figure 7 is a block diagram of a header extension of Figure 5, according to an embodiment;
Figure 8 is an example beam information table (BIT) of Figure 7, according to an embodiment;
Figure 9 is a block diagram of a channel header of Figure 5, according to an embodiment;
Figure 10 is an example channel information table (CIT) of Figure 5, according to an embodiment;
Figure 11 a block diagram of a channel packet of Figure 5 with a PDU type, according to an embodiment;
Figure 12 is a block diagram of a beam frame of Figure 5 over multiple real time transport (RTP) packets, according to an embodiment;
Figure 13A is a block diagram of an RTP header of Figure 12, according to an embodiment;
Figures 13B and 13C are table schemas of the RTP header of Figure 13A, according to respective embodiments; and
Figure 14 is a timeline diagram of burst and distributed frame timings beam streams of Figure 5, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods, and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to systems for simulating beam signals and more particularly to systems, methods, and devices for simulating radio frequency (RF) beam signals for testing transmission and receiving systems and platforms. The present disclosure provides a system and method for a simulated beam interface for regenerative satellite systems.

The signal simulator of the present disclosure is a communication interface that allows simulating beam signal links starting at various desired layers (physical, data link, network). Simulation at various levels enables simulation according to various applications, for example by simulating the level or levels corresponding to the particular application. Simulating particular levels beneficially avoids simulating extraneous or insignificant levels without dedicating the simulator to a particular application. This beneficially provides a fast and efficient simulator that is adaptive and scalable to a wide range of applications, because it only simulates to the level required.

The interface may be implemented between nodes of a communication network or corresponding simulators. The interface may be configured, via software, to simulate particular beam signals based on, for example, layer(s) or function(s) of interest. The beam is simulated by a stream of beam frames transmitted over multiple real-time protocol (RTP) packets.

The interface enables accurate functional simulation of beam signals, taking into account real factors such as beam hopping, signal quality, and other important parameters. Particularly, the system enables software-in-the-loop testing and real-time regenerative payload simulation testing based on metrics such as RF metrics. Ultimately, this interface enables testing, in real-time, entire satellite communication systems, including software beneficially mitigating costly, time consuming, and logistically difficult or unavailable testing using hardware or based on in-field modifications.

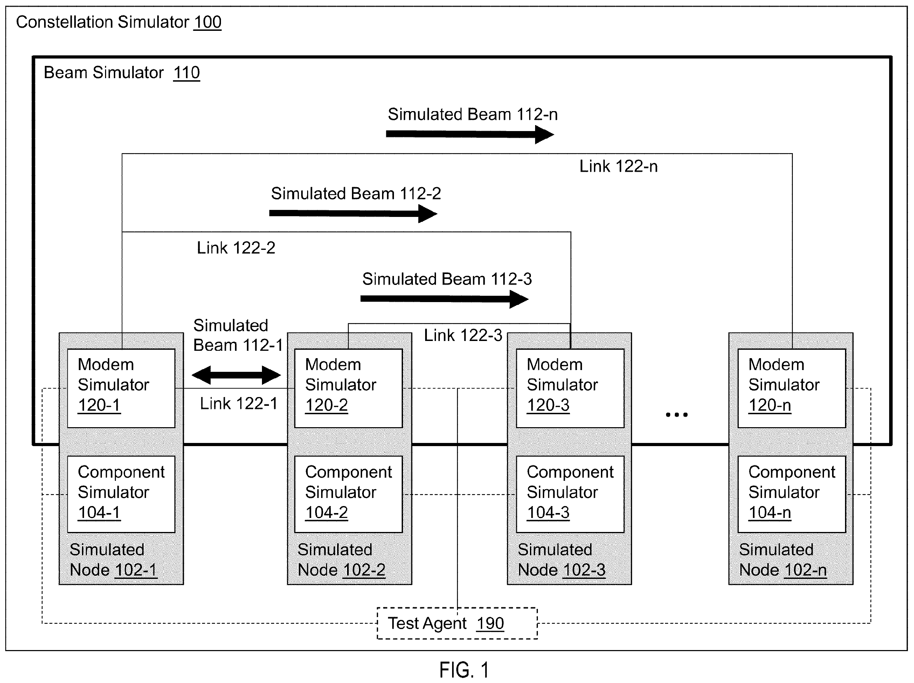

Referring now to Figure 1, shown therein is a block diagram of constellation simulator 100, according to an embodiment.

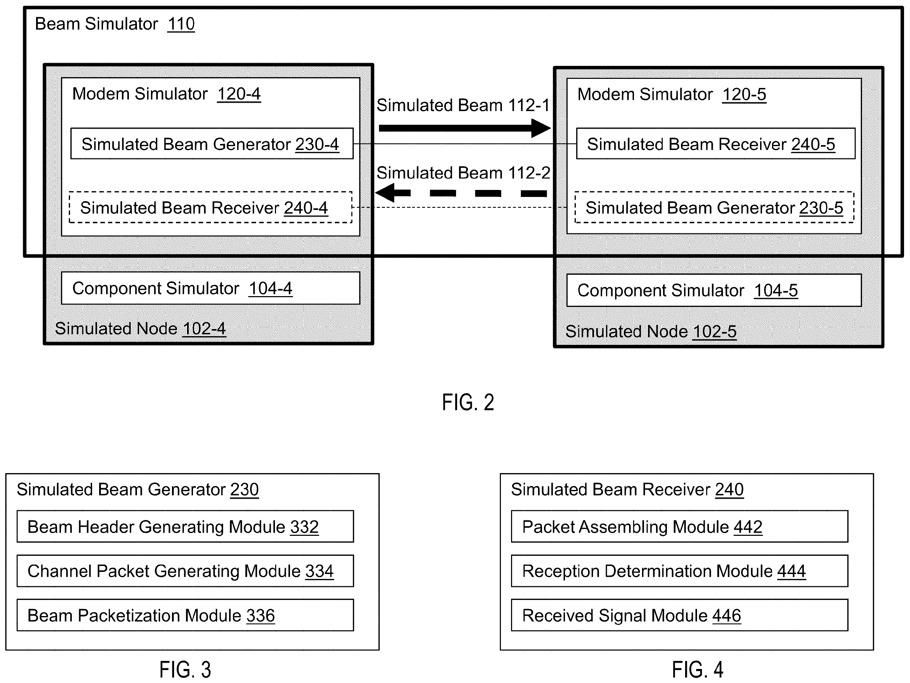

Referring now to Figures 1 and 2, shown therein are a block diagram of constellation simulator 100 and a beam simulator 110, respectively, according to an embodiment.

The constellation simulator 100 includes node simulators 102. The node simulators 102 simulate nodes of a communications network such as satellites, landing stations or user terminals. Nodes simulators 102 simulating landing stations and user devices may be known as ground nodes. Node simulators 102 simulating satellites and user devices may be known as space or airborne nodes.

The node simulators 102 simulate software and hardware of the corresponding component type including hardware and software for interfacing with links such as modems and switches, and for signal generation and receiving. The node simulators 102 are referred to herein collectively as node simulators 102, generically as node simulator 102, and specifically as node simulator 102-#. Elements corresponding to or of a node simulator 102-n are similarly referred to herein as ###-n. While the communications network is described in terms of a constellation simulator 100 with node simulators 102, it will be appreciated that in some embodiments, any or multiple node simulators 102 or the corresponding links are real components of the described node simulator 102. The beam simulator 110, as referred to herein, collectively includes the modem simulators 120 and the links 122 they simulate.

Each node simulator 102 includes a constellation component simulator 104 (or simply component simulator 104). The component simulator 104 simulates the components specific to the node simulated by the node simulator 102. In an example, the node simulator 102 is a satellite node and the component simulator 104 simulates the components (i.e. platform, payload, signal generation, and the like) of the satellite as well as any environmental aspects of the satellite (i.e. orientation, position, motion, local and the like).

In an embodiment, the component simulator 104 also runs the actual software of the constellation component being simulated (satellite, user terminal, landing station, etc.). The actual software may be software being tested but is actual to-be-deployed code. Running the to-be-deployed code mitigates an error introduced by a program that simulates the effects of the component being simulated.

Each node simulator 102 includes at least one modem simulator 120. Modem simulators 120 are referred to herein collectively as modem simulators 120, generically as modem simulator 120 and specifically as modem simulator 120-#. Each modem simulator 120 simulates an interface end of a link 122 between two node simulator 102 instances. Each modem simulators 120 generate or receive the simulated beam streams 112. The transmission may be either one way or two ways, one to many, and/or many to one.

In some embodiments, an instance of a modem simulator 120 is launched at each end of each link 122. Accordingly, some node simulators 102 include multiple modem simulators 120, one for each link 122. A simulated node 102 may include a modem simulator 120 for each type of simulated node 102 the node simulator 102 is intended to connect to. For example, the simulated node 102-1 may include a modem simulator 120-1 configured to simulate a connection with two satellite type simulated nodes 102-2 (second node not shown) and another modem simulator (not shown) configured to simulate a connection with a ground terminal type node 102-3. Modem simulators 120-1 through 120-3 simulate links 122-1 and 122-2 between a first node simulator 102-1 and each of the second and third node simulators 102-2 and 102-3, respectively, link 122-3 between the second node simulator 102-2 and third node simulator 102-3 and link 122-4 between the fourth node simulator 102-4 and the fifth node simulator 102-5. System including additional links 122-n between additional simulators 120-n are expressly contemplated. Each link 122 may be over hardware such as an ethernet cable. Where two or more modem simulators are simulate on a single device, the link 122 may be software based.

In an example, as shown in Figure 1, the first node simulator 102-1 and second node simulator 102-2 simulate satellites, and the third node simulator 102-3 simulates a landing station. Links 122, such as link 122-1, may be a simulated optical inter-satellite link (OISL).

Each modem simulator 120 is a communication interface that enables simulating beam signals 112-1 through 112-n. The beam signals may be RF signals such as return channel satellite signals (RCS) or optical signals. For example, the signal 112-2 may be a digital video broadcasting (DVB^{™}) satellite second generation (STX) RCS2 signal.

Each modem simulator 120 may simulate the beam signal 112 starting at desired layer (physical, data link, network). In an example, the modem simulator 120 may simulate beam signals 112 down to the physical layer (i.e. In-phase and quadrature component (IQ) symbols). Testing down to the physical layer may be accomplished by sending physical layer frames (PL frames) or SuperFrames.

In a further example, the modem simulator 120 may simulate beam signals 112 down to the network layer (i.e. protocol data units (PDUs)), such as, when radio modulation is not the function of interest, to simplify and speed-up simulation.

In a further example, the modem simulator 120 may simulate beam signals 112 down to the data link layer, such as, via generic stream encapsulation (GSE) by sending GSE packets directly.

Simulating down to a selected layer beneficially eliminates simulating modulation/demodulation of the signal by sending PDUs directly.

The modem simulator 120 simulates beams 112 in a format fully compatible with existing networks, such as ethernet and IP networks. Unicast or multicast real-time transfer protocol streaming enables this compatibility.

Generation of the beam signal 112 and arrival time of data across the simulated link 122 is very close to the actual system (but potentially at lower rate). This beneficially allows validating synchronization functionality.

RF metrics are included on the interface. Including RF metrics beneficially facilitates simulating algorithms such as adaptive coding modulation (ACM) and Doppler compensation, and the like.

The modem simulator 120 simulates satellite uplinks and downlinks beams. The simulation 122 facilitates functional regenerative satellite modeling.

In some embodiments, the beam simulator 110 simulates beam forming, beam hopping, beam tracking or the like.

The beam simulator 110 creates virtual space networks and routes real packets in real-time.

The simulation is not affected by environmental latencies as timestamping is used. Channel quality versus capacity is also simulated. The simulation beneficially enables or facilitates validation and experimentation of telemetry/telecommand (TM/TC) over high-speed links, testing user and feeder link interfaces, testing ACM, testing dynamically changing network topologies considering contact plans, and testing payload configurations and functional operation.

A node simulator 102 may be configured to simulate a satellite. Satellite node simulators 102 are part of a simulated constellation. In an example, the simulated constellation 100 includes simulated satellite 102-1 and simulated satellite 102-2.

Each satellite simulator 102 includes a component simulator 104. The component simulator 104 simulates the software or effects thereof of a platform component.

Where the component simulator 104 simulates a satellite the component simulator may include a payload simulator. The payload simulator simulates the software and effects thereof of the communications payload of a satellite payload.

The payload simulator is configured to run the actual on-board processor software (OBPSW) of the payload being simulated. In some embodiments, the OBPSW is run in an emulated/simulated Linux containerized environment (under windows or Linux). The code may be compiled for x86 using a payload provider distribution.

The constellation simulator 100 further includes test agent 190. The test agent is also referred to herein as the test application 190. The test application 190 provides ways to configure, inject errors and inspect components of the constellation simulator 100. In particular, the test agent 190 provides ways to configure the component simulators 104 and modem simulators 120. For example, the test agent 190 may configure the component simulator 102 to generate a signal including certain test data. The test agent 190 also may inject components into the simulation such as errors, inspect components, and additional signal streams also known as noise. These configurations and injected components typically add simulated influences aspects beyond those inherent to the simulated components 104 and their simulated beams 112. For example, the configuration to generate a certain test data may simulate the effects of mission parameters and the injected noise may simulate the effects of non-simulated nodes on the receiving simulated node 102.

The test application 190 may be configured based on an API configured according to a test framework. The simulated nodes 102 and test agents 190 may be implemented at a single computing device or across multiple computing devices.

Referring specifically to Figure 2, modem simulator 120-5 includes a simulated beam receiver 240-5. Modem simulator 120-4 also may include a simulated beam receiver 240-4 for simulating two-way communication. Each simulated beam receiver 240 is configured to receive a beam signal stream 112 from a corresponding beam signal generator 230, further described below. The simulated beam receiver 240-5may receive signals from multiple sources such as simulated beam generators 230 simultaneously enabling the uplink side simulated to be many to one.

Modem simulator 120-4 includes a simulated beam generator 230-4. Modem simulator 120-5 also may also include a simulated beam generator 230-5 for simulating two-way communication. Each simulated beam generator 230is configured to provide a beam signal stream 112 to a corresponding simulated beam receiver 240. Each simulated beam generator 230 may provide signals to multiple targets, such as simulated beam receivers 240, simultaneously enabling the downlink side simulated to be one to many.

Referring to Figure 3, shown therein is a block diagram of a simulated beam generator 230, according to an embodiment.

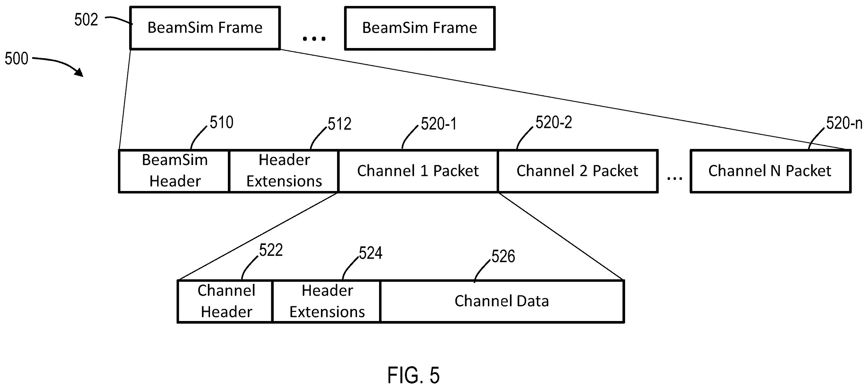

The simulated beam generator 230 includes a beam header generating module 232 configured to generate a beam frame header (including header extensions) such as the beam frame header 510 and header extensions 512 of Figure 5.

The simulated beam generator 230 includes a channel packet generating module 334 configured to generate channel packets including channel data, such as the channel packets 520 and channel data 526 of Figure 5.

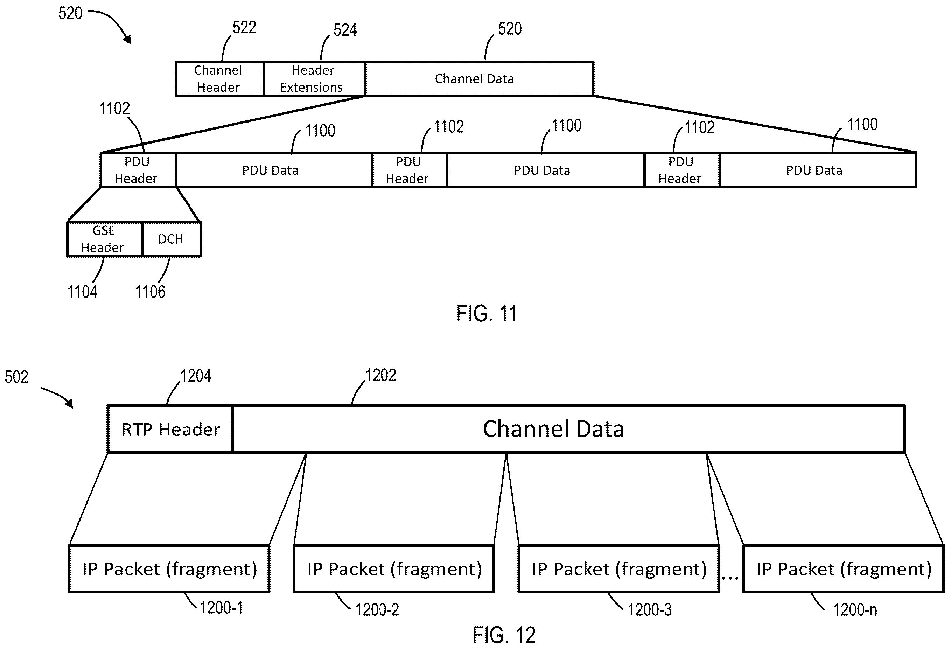

The simulated beam generator 230 includes a packetization module 336 configured to combine the beam frame header and channel packets into a beam frame such beam frame 502 of Figure 12, packetize the beam frame 502 into packets such as RTP packets 1200 of Figure 12 and provide the packets to the simulated beam receiver 240 of Figure 2.

Referring to Figure 4, shown therein is a block diagram of a simulated beam receiver 240, according to an embodiment.

The simulated beam receiver 240 includes a packet assembling module 442 configured to assemble the beam frame 502 of Figure 5 from received packets such as the RTP packets 1200 of Figure 12.

The simulated beam receiver 240 includes a reception determination module 444 configured to determine if the simulated beam stream 112 of Figures 1 and 2 is received based on the beam header 510 of Figure 5 and the node information of the simulated node 102 of Figure 2. The determination of reception or lack thereof may be absolute. For example, where the simulated node is not determined to be lit up, no reception is determined. The determination of reception of lack thereof determination may be probabilistic. For example, the determination may be based on performance factors of the involved simulated nodes.

The simulated beam receiver 240 includes a received signal module 446 configured to generate a received signal from channel packets of the assembled signal and provide the generated received signal to the component simulator 102 of Figure 2.

Referring to Figure 5, shown therein is a block diagram of a simulated beam stream 500, according to an embodiment.

The simulated beam stream 500 is a continuous stream of beam frames 502. The beam frame 502 is the main container of the beam information. Each beam frame 502 contains a data chunk that represents a time span, such as a Subframe, a dwell, a burst, subframes, etc. Size is variable across beam frames 502 and can be quite large.

Each beam frame 502 represents a beam dwell and particularly the data contained in the beam dwell. The size of each beam frame 502 is variable from frame to frame and can be quite large. There are now size limits on a beam frame 502. The dwell represents the amount of time the constellation simulator 100 is slowed down to account for latencies of the simulation beyond real world latencies.

In some embodiments, for non-hopping beams, a special framing structure is defined. Here, the beam frame 502 would contain all the data originating from this time duration.

Each beam frame includes a beam header 510. The beam header 510 contains information corresponding to the beam frame 502 as a whole.

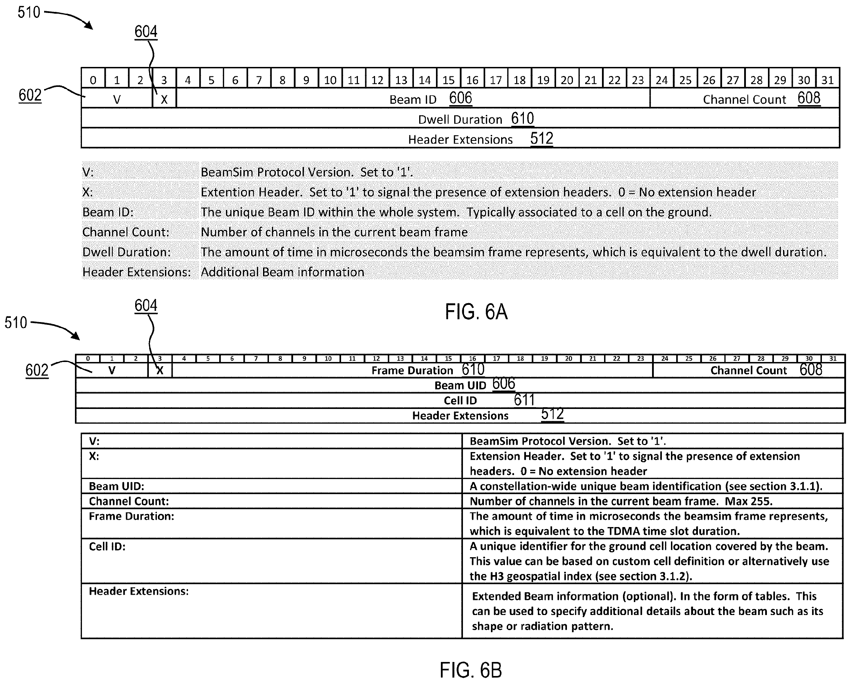

Referring also to Figures 6A and 6B, shown therein are block diagrams of a beam header 510, according to two embodiments.

The beam header 510 includes a version (V) 602. The version (V) 602 indicates a version of the beam simulator, such as beam simulator 150 of Figure 1, that simulates the corresponding beam frame 502. In an example the version (V) 602 is set to '1'.

The beam header 510 includes an extension header (X) 604. The extension header (X) 604 signals the presence or absence of header extensions 512, further described below. In an example, the extension header (X) 604 is set to '1' to signal the presence of header extensions 512 and '0' to signal no extension headers 512.

The beam header 510 includes a beam identifier (ID) 606 or beam unique ID (UID). The beam ID 606 is a unique ID of the beam frame 502 in the constellation simulator 100 of Figure 1. The beam ID 606 is typically associated to a cell on the ground. In some embodiments, the beam ID 606 is a 32 bit ID.

In an embodiment, upstream and downstream beams have unique beam IDs 606, which are generated by the simulated satellite type nodes 102 of Figure 1 and are announced to simulated ground type nodes 102 of Figure 1. The unique numbers of the beam IDs 606 are computed based on the simulation environment configuration and know from which modulator (i.e. simulate beam generator 230 of Figure 2) in a simulated satellite 102 they are generated (downstream beams), or on which demodulator (i.e. simulated beam receiver 240 of Figure 2) in a simulated satellite 102 they are received (upstream beams).

The Beam UID 606 may be computed based on a series of parameters. In an example the simulation environment 100 of Figure 1 provides a set of configuration parameters such as:

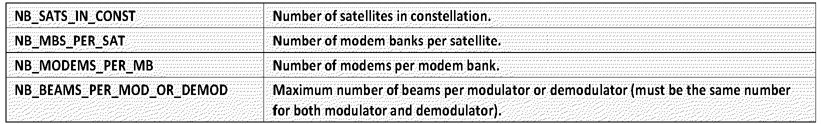

Based on the configuration parameters a series of environment variables or application variables are set to identify each simulated element with indexes. The environment and application variables may include:

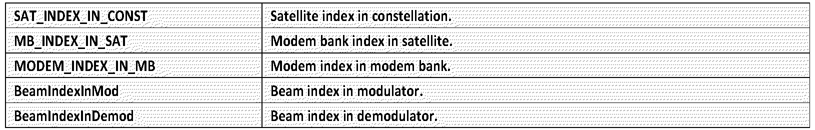

Based on the configuration parameters and the different indexes, the simulated element can be assigned a unique identifier 606. In an example, the computation is according to the following:

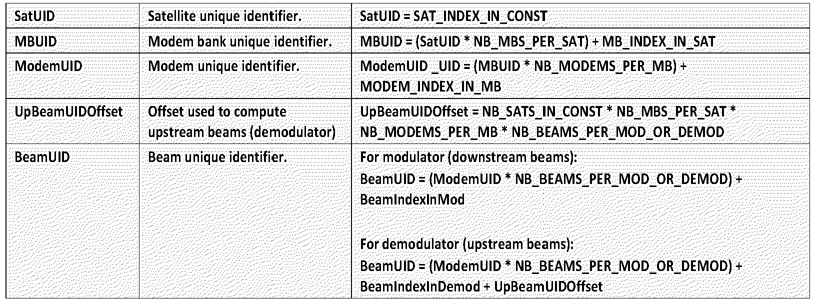

The computed Beam ID 606 value is used to populate the Beam ID 606 field. The number possible unique Beam IDs 606 can be computed by according to NbBeamUIDs = NB_SATS_IN_CONST * NB_MBS_PER_SAT * NB_MODEMS_PER_MB * NB_BEAMS_PER_MOD_OR_DEMOD * 2.

The beam header 510 includes a channel count 608. The channel count indicates the number of channels in the current beam frame 502.

The beam header 510 includes a dwell or frame duration 610. The dwell duration 610 indicates the amount of time the beam frame 502 represents. This time is equivalent to a dwell duration of an actual signal that the simulated beam frame simulates. The dwell duration 610 is in microseconds.

In some embodiments, the beam header 510 includes a cell ID 611. The Cell ID 611 is a unique identifier for a region of the globe covered by a beam of a given size. Among other things, this identifier facilitates computation of a destination IP address for the downstream beams in the simulation environment 100. The cell ID 611 can be custom or can be created using the geospatial indexing systems (GIS) such as the H3 system. The cell ID 611 can be used by simulated receiving nodes 102 of Figure 2 to determine if the simulated node 102 sees the beam or not depending on simulated node's 102 simulated location and the directivity and shape of the simulated node's 102 own beams. This facilitates simulating spatial aspects of beam forming.

In some embodiments, the cell ID 606 is created using a subset of a GIS index. In an example, the cell ID 606 is created using a 7-bit base cell followed by the first five 3-bit hierarchical digits, which creates a 22-bit identifier. Each of the five digits allows a better precision on the location. Each additional digit corresponds to a resolution level.

The beam header may include header extensions 512. The header extensions 512 include additional beam frame 502 information such as the shape\radiation pattern, strength in certain directions, maximum bandwidth it may carry, or any other information deemed useful within the system.

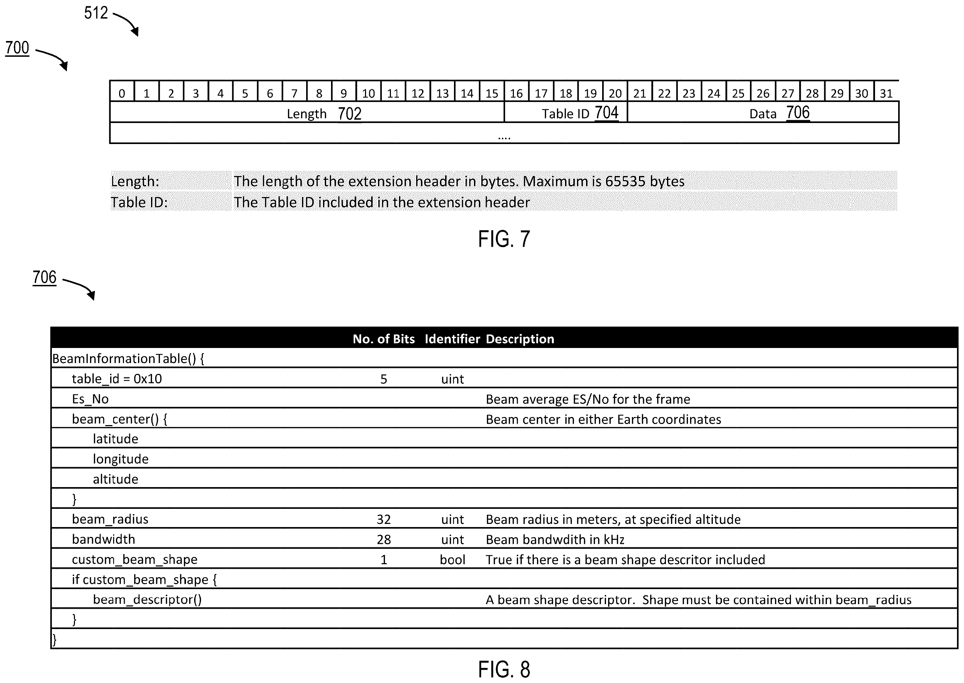

Referring to Figure 7, shown therein is a block diagram 700 of a header extension 512, according to an embodiment.

The header extension 512 includes a length 702. The length 702 indicates the length of the header extension 512. The length 702 is in bytes with a maximum length of 65535 bytes.

The header extension 512 includes a table ID 704. The table ID 704 indicates the table included in the header extension 512. In some embodiments, IDs 16 to 31 are used for custom tables and Ids 0 to 15 are reserved for the protocol.

The header extension 512 includes data such as a beam information table (BIT) 706. The BIT 706 includes environmental information corresponding to the beam frame 502. The information of the BIT 706 enables the constellation simulator 100 of Figure 1 to simulate beam forming and beam hoping. The simulated beam receiver of Figure 2 determines if the beam frame 502 received is within range of its receive (Rx) beam former. A BIT 706 is included on every beam frame 502 as header extension 512. The BIT 706 is generated by a simulated beam generator module 230 based on its configuration for the dwell.

For satellites such as satellite simulators 102-1 of Figure 1, the position and attitude of the simulated satellite is set. The position of the satellite is constantly changing. In some embodiments, the position is sampled at start of dwell and set by simulation control. In some embodiments the position is simulated using satellite dynamics.

For terminals such as terminals 102-3 of Figure 1, the position of the terminal and the radius of the beam is set. All simulated terminals 102-3 receive all beam frames 502 on the links they are connected to. Terminals 102-3"spatially filter" the beam frames 502 based on the BIT information and its own position. The BIT 706 is valid for all beam simulator channel data formats.

Referring to Figure 8, shown therein is a BIT 706, according to an embodiment.

The BIT 706 includes the table ID 704, an energy per symbol to noise density ration (Es/No), a beam center latitude/longitude/altitude, a beam radius, beam bandwidth, and custom beam shape (with beam description). Based on the information in the BIT 706, a determination is made on whether the area of a terminal 102-3 of Figure 1 is within the area range of the RX beam former (i.e. is illuminated by the beam frame 502). If so, the beam frame is kept; otherwise (i.e. a different area of the earth) the beam frame is discarded.

Referring again to Figure 5, the beam frame 502 includes any number of channel packets 520-1 through 520-n. A beam frame 502 only contains channel packets 520 for which data is available during the time frame of the beam frame 502. As such, a particular channel could be present in certain beam frames and absent in others. Each channel packet 520 contains the all the data carried on the specified channel for the beam frame 502 time period. If no data is available, no channel packet 520 is generated. The channel packet 520 is a true packet such as if it came from actual hardware.

The channel packet 520 includes a channel header 522. The channel header 522 includes information about the channel in general.

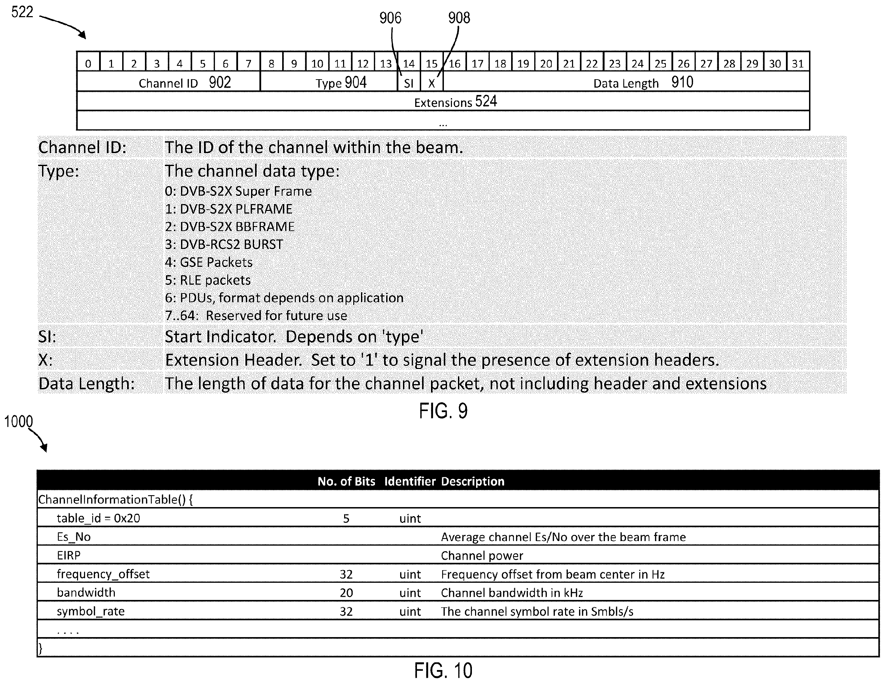

Referring also to Figure 9, shown therein is a block diagram of a channel header 522, according to an embodiment. The channel header 522 includes a channel ID 902. The channel ID 902 indicates an ID of the channel within the beam frame 502.

The channel header 522 includes a channel type 904. The channel type 904 indicates a type of the channel packet 520. In an example, the channel type 904 of 0 through 6 indicates, respectively, a type of DVB-S2X super frame, DVB-S2X plframe, DVB-S2X bbframe, DVB-RCS2 Burst, GSE packets (i.e. DVB-S2/S2X GSE Packets), RLE packets (i.e. DVB-RCS2 RLE/L2S Packets), Generic Packet Data Units (PDUs) (format depends on application). In some embodiments, 7 indicates LTE Subframe and 8 indicates 5G-NR Subframes.

The channel header 522 includes a start indicator (SI) 906. The start indicator depends on the type 904.

The channel header 522 includes an extension header indicator (X) 908. The extension header indicator (X) 908 signals the presence or absence of channel header extensions 524, further described below. In an example an extension header indicator (X) 908 of '1' signals the presence of channel header extensions 524 and '0' signals their absence.

The channel header 522 includes a data length 910. The data length 910 indicates the length of the channel packet 520. The length 910 does not include the length of the channel header 522 and any header extensions 524.

The channel header 522 includes the channel header extensions 524. The channel header extension is configured similarly to header extensions 512 of Figure 7 of the beam frame 502 of Figure 5. The header extensions 524 include additional channel data stored, for example in a channel information table (CIT) such as shown in Figure 10.

In some embodiments, the channel header 522 includes bandwidth and/or frequency. The bandwidth may be in tens of Hertz from 10Hz to 40Ghz. The frequency may be in Hertz.

Referring also to Figure 10, shown therein is a CIT 1000, according to an embodiment.

The CIT 1000 includes information such as a table id, Es/No, equivalent isotropic radiated power (EIRP), frequency offset, bandwidth, symbol rate, snr, etc. of the channel.

A CIT 1000 is added as a header extension 524 on every channel packet 520 to carry channel parameters. The CIT 1000 is generated by a simulated modem module such as the modem bank app 122 of Figure 2. EIRP and Es/No enables evaluation of channel quality.

In some embodiments, EIRP and Es/No are generated at source, and represent what a receiver would see. In some embodiments, an impairment module is inserted between the source and the destination.

The beam simulator receiver may determine channel quality by extracting information for the CIT 1000. For example, the doppler effect may be determined based on the frequency offset. Effects of equivalent bit error rate (BER) and drop packets at that rate may also be simulated. Modem telemetry of the channel is also populated from the CIT.

Referring back to Figure 5, the channel packet 520 includes channel data 526. The channel data 526 may be framed according to the channel type 904 of Figure 9.

Referring to Figure 11, shown therein is a block diagram of a channel packet 520 with a PDU type, according to an embodiment.

The channel packet 520 includes channel headers 522, channel header extensions 524, and channel data 526 similarly configured to the channel header 522, channel header extensions 524, and channel data 526 of Figure 5.

The channel data 526 includes multiple PDU data components 1100. The number of PDU data components 1100 is driven by channel parameters and PDU data 1100 coding format. Parameters may include, for example, Symbol rate (channel header), dwell duration (frame header), waveform coding format.

Each PDU data component 1100 includes a PDU header 1102. The PDU header 1102 includes a GSE header 1104. No packet fragments are necessary since there is no baseband (bb) frame (bbframe) at that level. The PDU header 1102 includes a dedicated channel (DCH) 1106. The DCH 1106 contains information on waveform coding format. In an example the channel type is a DVB-S2X type and the DCH 1106 is the modulation and coding (MODCOD) field. In a further example, the channel type is a RCS2 type and the DCH 1106 is a waveform ID field.

Channel capacity depends on channel parameters and PDU coding format. These are configured by simulation controller in each terminal. The amount of PDU bits packed into a beam frame 502 channel is directly dependent on channel capacity. Space available on beam frames 502 of type BBFRAME, taking into account MODCOD and GSE encapsulation drives the number of bits available to pack PDUs 1100. Symbol Rate of channel vs. dwell duration are needed to derive number of PDUs 1100 per beam frame 502.

Referring also to Figure 10, ACM may also be simulated. In PDU data format, the MODCOD/waveform ID is carried with each PDUs 1100. The CIT 1000 provides information about the channel quality. This information is given as modem status, so the ACM loop can extract. A terminal simulator, such as terminal 102-3 of Figure 1, sends layer 2s (L2S) packets as in the real system. MODCOD changes are reflected by the MODCOD of the PDU header 1102. The number of packets in a channel beam frame 502 of Figure 5 is adjusted according to the packet new MODCODs. This accommodates simulating degradation and latencies of a channel and will have the same effects as in the real system, that is, reduce link capacity and potentially buffer overflows leading to packet drop as per quality of service (QoS) rules.

Referring to Figure 12, shown therein is beam frame 502 over multiple internet protocol (IP) packets or fragments 1200, according to an embodiment. Each IP packet 1200 is configured per real time protocol (RTP) and accordingly is referred to here is an RTP packet 1200.

Each beam frame 502 is transported over multiple RTP packets 1200. RTP packets 1200 are referred to herein collectively as RTP packets 1200, generally as RTP packet 1200, and specifically as RTP packet 1200-n. It will be appreciated that each packet of Figure 5 (i.e. a beam header 510, a beam header extension 512, or a channel packet 520) may be transmitted over multiple RTP packets 1200 and one RTP packet 1200 may transmit multiple of the same, in whole or in part. If the beam frame 502, including its RTP header 1204, is larger than the Maximum Transmission Unit (MTU) of the beam network 110 of Figure 1, the IP stack will automatically break the beam frame 502 down into fragments 1200 of one MTU or less, as shown.

In some embodiments, there is enough channel data 1202 to fill more than one beam frame 502 (i.e. 64kb) at a particular time. This may be known as an oversized beam frame. Several beam frames 502 can be created to accommodate oversized beam frames. Each beam frame 502 includes its own RTP header 1204 and beam header 510 of Figure 5. Each RTP header 1204 will have the same timestamp to simulate that all data of the oversized beam frame has been sent at the same time. The RTP sequence number assigned to each beam frame will be incremented. The RTP marker bit is set to 1 for each beam frame 502 to indicate that the each beam frame is independent from the remaining beam frames 502. Channel count 608 of Figures 6A and 6B will be adapted for each beam frame 502 with the remainder of the information of the beam header 510 of Figures 6A and 6B being the same.

In some embodiments, the RTP packets 1200 are transported over ethernet links. The speed of the link must be higher than the desired beam throughput. In an example, simulated at the network layer, a beam of 1GHz and spectral efficiency of its channels of 4bps/Hz would require a link with a speed greater than 4Gbps. A GigE link would support a beam of at most 250MHz (1Gbps). Link speeds of 10GigE or 100GigE would support most applications. This tolerates network and processing latencies.

Each RTP packet 1200 includes an ethernet header (eth header) 1202, an internet protocol (IP) header 1204, and a user datagram protocol (UDP) header 1206 for sending the RTP over ethernet and existing networks. The RTP packet includes a payload 1210 for transmitting data such as the packets of Figure 5 (i.e. beam headers 510, beam header extensions 512, or channel packets 520).

Each RTP packet 1200 includes an RTP header 1208. The RTP header 1208 includes information related to the RTP packet 1200 such as timing and sequencing.

Referring also to Figured 13A, 13B, and 13C, shown therein is a block diagram of an RTP header 1208, according to an embodiment and table schemas of the RTP header 1208 according to a first and second embodiment, respectively. The RTP header includes a version (V) 1302 indicating the RTP version of the RTP packet 1200.

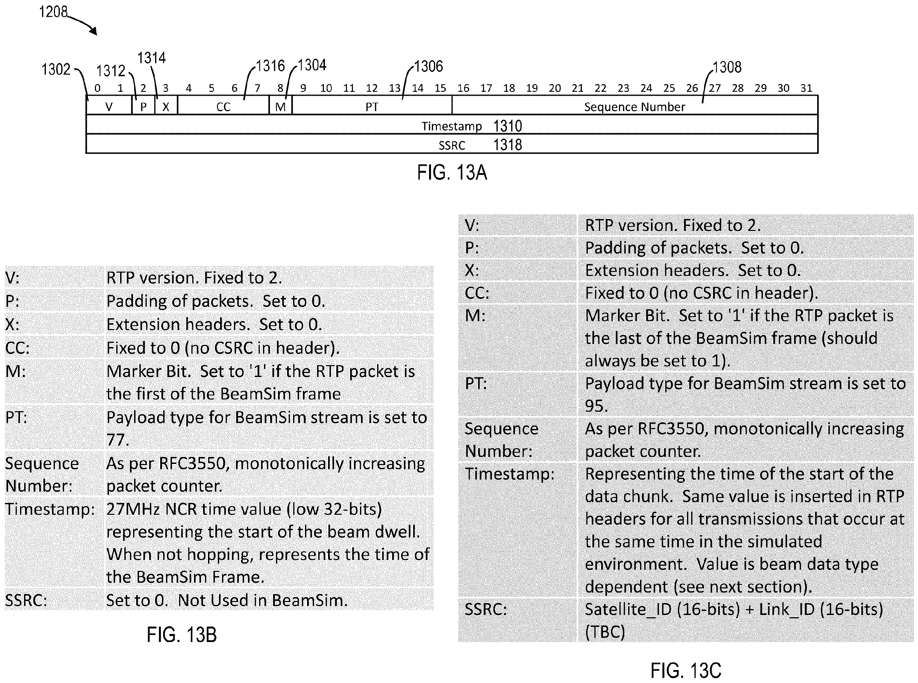

The RTP header 1208 includes a marker bit (M) 1304 for indicating if the RTP packet 1200 is the first of the beam frame 502 of Figure 5. In an example, as shown in Figure 13A, a marker bit (M) 1304 of '1' indicates the RTP packet 1200 is the first packet in the beam frame 502 and '0' indicates the otherwise. In a further example, as shown in Figure 13B, a marker bit (M) 1304 of '1' indicates if the RTP packet is the last of the BeamSim frame. In this example the marker bit (M) 1304 should always be set to 1.

The RTP header 1208 includes a payload type (PT) 1306 for indicating a type of the payload 1210. In an example the payload the PT 1306 is set to '77' (as shown in Figure 13B and '95', as shown in Figure 13C, to indicate a beam frame type. The payload type 1306 could be dynamic or assigned.

The RTP header 1208 includes a sequence number 1308. The sequence number 1308 is per the internet engineering task force (IETF) request for comment (RFC) 3550 or IETF RFC3550. The sequence number 1308 is a monotonically increasing packet counter.

The RTP header 1208 includes a timestamp 1310. In an example, as shown in Figure 13B, the timestamp 1310 represents the starting network clock reference (NCR) time value of the beam dwell or, when not hopping, the time of the beam frame 502 of Figure 5. The NCR time value may be a 27MHz NCR time value (low 32-bits). In a further example, as shown in Figure 13C, the timestamp 1310 represents the time of the start of the data chunk. Same value is inserted in RTP headers 1208 for all transmissions that occur at the same time in the simulated environment 100 of Figure 1. Value is beam data type dependent.

The RTP header 1208 includes a synchronization source (SSRC) 1318. In an example, as shown in Figure 13B the SSRC 1318 is set to '0' indicating that it is not used. In a further example, as shown in Figure 13 C, the value of the SSRC 1318 is set to a Satellite_ID (16-bits) and a Link_ID (16-bits) (TBC).

The RTP header 1208 includes a padding (P) 1312, extension (X) 1314, and contributing source count (CC) 1316. These values are set to '0' indicating that they are not used.

Using RTP packets 1200 enables handling of timing inaccuracies. It will be appreciated that RTP packets 1200 are never received before the dwell start time by design. However, RTP packets 1200 will be late due to network and processing latencies. The RTP timestamp 1310 indicates which dwell each RTP packet 1200 belongs to. The beam former + modem simulators are expected to get their configuration on specific dwell start time (in NCR). These start times are kept in memory and compared to the RTP timestamps 1310, allowing to eliminate the effects of latency. The beam former will know what directions the beam had at the RTP time of the packet 1200. Therefore, using timestamping rather than a real-time clock enables eliminating latencies of the simulation environment.

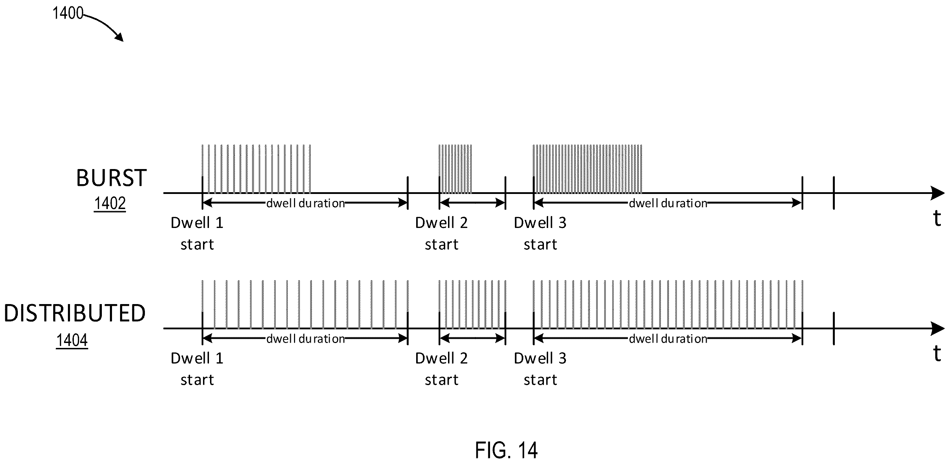

Referring also to Figure 14, shown therein is a timeline diagram 1400 of burst frame timing 1402 and distributed frame timing 1404, according to an embodiment.

The timestamp 1310 of the RTP packets 1200 enables sending the RTP packets 1200 in a burst or distributed over the dwell period. Particularly, RTP packets 1200 rely on a simulated timestamp 1310 rather than the real-time clock time of the transmitted packet. As the time of note (i.e. the timestamp 1310) does not correspond to when the packet was sent, the distribution (or lack thereof) of the packets 1200 does not affect packet timing (i.e. latencies). It will be appreciated that the first RTP packet 1200 of a beam frame 502 (i.e. with the marker bit 1304 set) shall be sent at the dwell start time and no packets are transmitted during the beam switch interval. Accommodating burst and distributed transmission of RTP packets 1200 beneficially enables the use of network interface cards (NICs) which only support burst mode such as commercial off the shelf (COTS) NICs for devices running windows^{™} or Linux^{™} or which may benefit from a distributed mode such as NICs which support time accurate field programmable gate arrays (FGPAs) with SDKs.

The beam simulator and method above beneficially enable simulation of, at least but not limited to beam forming and beam hopping, interference due to terminals using the same time slots, channel capacity, channel quality, ACM, traffic-driven beam hopping, dynamic resource allocation, and working space networks with true traffic.

The timestamp 1310 may also be offset to simulate latency. The timestamp 1310 may be compared with the local time to see if the modem was listening (i.e. caught the beam in whole or in part.

While the above description provides examples of one or more apparatus, methods, or systems, it will be appreciated that other apparatus, methods, or systems may be within the scope of the claims as interpreted by one of skill in the art.

## Claims

1. A constellation simulator for testing transmission and receiving systems and platforms using simulated beams, the constellation simulator comprising a plurality of nodes, a first node of the plurality of nodes comprising:
a component simulator configured to simulate the components specific to the corresponding node; and
a first modem simulator for communicatively connecting to a second modem simulator over a first simulated link, the first modem simulator comprising one or
more of:
a first simulated beam generator comprising a first beam packetization module configured to:
packetize a first beam frame into first beam real-time protocol (RTP) packets each first beam RTP packet comprising an RTP header, the RTP header comprising:
a timestamp representing a start time of a timeframe of the first beam frame; and
a marker indicating the index of the each first RTP packet in the first beam frame; and
provide the first RTP packets to the second modem simulator over the first simulated link; and
a first simulated beam receiver comprising:
a packet assembling module configured to receive and assemble second RTP packets from the second modem simulator based on the a second RTP header to obtain a second assembled beam frame corresponding to a second beam frame.

2. The constellation simulator of claim 1 wherein:
the first simulated beam generator further comprises a first beam header generating module configured to generate a first beam header comprising beam information; and
the first beam packetization module is further configured to combine the first beam header and channel data to obtain the first beam frame.

3. The constellation simulator of claim 1, wherein the second simulated beam receiver further comprises a reception determination module configured to determine based on beam information of the second beam frame if the second assembled beam frame is received.

4. The constellation simulator of claim 3, wherein the beam information comprises one or more of an energy per symbol to noise density ration (Es/No), a latitude, longitude and altitude of the beam center, a beam radius, beam bandwidth, and custom beam shape and the determination of if the beam frame is received, is based on if the beam information the indicates that the beam is within the area range of the receive beam former.

5. The constellation simulator of claim 1, wherein the first simulated beam generator further comprises a first channel packet generating module configured to obtain first beam channel packets from a multi-channel signal; and
the first beam packetization module is further configured to combine the first beam channel packets to obtain the first beam frame.

6. The constellation simulator of claim 1, wherein the first simulated beam receiver further comprises a received signal module configured to generate a received signal from the second assembled beam frame.

7. The constellation simulator of claim 1, wherein one or more of the first simulated beam generator and the first simulated beam receiver is communicatively connected, respectively, to a third simulated beam generator and receiver over a second simulated link.

8. The constellation simulator of claim 1, wherein the first simulated beam generator is configured to generate a first beam stream comprising a plurality of beam frames over the first simulated link, the first beam frame being of the plurality of beam frames.

9. The constellation simulator of claim 1, wherein the first RTP packets are transmitted in a burst or distributed across the timeframe of the beam frame.

10. The constellation simulator of claim 1, wherein the timeframe of the beam frame is one or more of a dwell time, a burst time, a subframe and subframes.

11. The constellation simulator of claim 1, further comprising a test agent configured to configure, inject errors into and inspect components of the constellation simulator.

12. A beam simulator for simulating beam signals for testing transmission and receiving systems and platforms, the beam simulator comprising:
a first modem simulator communicatively connected to a second modem simulator over a first simulated link,
the first modem simulator comprising a first simulated beam generator comprising a first beam packetization module configured to:
packetize a first beam frame into first beam real-time protocol (RTP) packets each first beam RTP packet comprising an RTP header, the RTP header comprising:
a timestamp representing a start time of a timeframe of the first beam frame; and
a marker indicating the index of the each first RTP packet in the first beam frame; and
provide the first RTP packets to the second modem simulator over the first simulated link; and
the second modem simulator comprising a second simulated beam receiver comprising:
a packet assembling module configured to receive and assemble the first RTP packets based on the RTP header to obtain a first assembled beam frame corresponding to the first beam frame.

13. The beam simulator of claim 12, wherein:
the first simulated beam generator further comprises a first beam header generating module configured to generate a first beam header comprising beam information;
the first beam packetization module is further configured to combine the beam header and channel data to obtain the first beam frame; and
the second simulated beam receiver further comprises a reception determination module configured to determine based on the beam information if the beam frame is received.

14. The beam simulator of claim 13, wherein the beam information comprises one or more of an energy per symbol to noise density ration (Es/No), a latitude, longitude and altitude of the beam center, a beam radius, beam bandwidth, and custom beam shape and the determination of if the beam frame is received is based on if the beam information indicates that the beam is within the area range of the receive beam former.

15. The beam simulator of claim 12, wherein the first simulated beam generator further comprises a first channel packet generating module configured to obtain first beam channel packets from a multi-channel signal;
the first beam packetization module is further configured to combine the first beam channel packets to obtain the first assembled beam frame; and
the second simulated beam receiver further comprises a received signal module configured to generate a received signal from the first assembled beam frame.
